# EUROPÄISCHE PATENTANMELDUNG

(11) **EP 4 027 506 A1**
(43) Veröffentlichungstag der Anmeldung: **13.07.2022**
(21) Anmeldenummer: 21150635.7
(22) Anmeldetag: 08.01.2021
(51) Int. Cl.: H02M 7/483, H02M 1/32

(54) **STROMRICHTER UND VERFAHREN ZUM BETREIBEN DES STROMRICHTERS**

(71) Anmelder: Siemens Energy Global GmbH & Co. KG, 81739 München (DE)
(72) Erfinder: ALVAREZ VALENZUELA, Rodrigo Alonso, 90408 Nürnberg (DE); DORN, Jörg, 96155 Buttenheim (DE); WANG, Yeqi, 91094 Langensendelbach (DE); DALLMER-ZERBE, Kilian, 91088 Bubenreuth (DE)

(57) **Zusammenfassung**

Die Erfindung betrifft ein Verfahren zum Betreiben eines Stromrichters (2), der zwischen je einer Wechselspannungsseite und einer Gleichspannungsseite schaltbare oder mit Phasenleitungen eines Wechselspannungsnetzes verbindbare Stromrichterarme (5-10) umfasst, wobei jeder Stromrichterarm eine Reihenschaltung von Schaltmodulen (SM) mit jeweils mehreren Halbleiterschaltern (HL) und einem Energiespeicher ^{©} aufweist, bei dem anhand eines Zustandsmodells des Stromrichters wenigstens ein Temperaturwert des Stromrichters ermittelt wird, unter Berücksichtigung des Temperaturwertes wenigstens ein Sollstrom-Begrenzungswert ermittelt wird und ein Sollstromwert unter Berücksichtigung des Sollstrom-Begrenzungswertes bestimmt wird. Die Erfindung zeichnet sich dadurch aus, dass der Temperaturwert, der Arm-Sollstromwert, der Arm-Iststromwert und/oder der Arm-Sollstrom-Begrenzungswert bzw. eine davon abgeleiteten Größe unter Bildung eines Arm-Integralwertes in der Zeit integriert wird, wobei, wenn der Arm-Integralwert einen vorbestimmten Arm-Integralschwellenwert erreicht oder überschreitet, eine Schutzmaßnahme durchgeführt wird. Die Erfindung betrifft ferner einen Stromrichter (2), der zum Durchführen des erfindungsgemäßen Verfahrens eingerichtet ist.

## Beschreibung

Die Erfindung betrifft ein Verfahren zum Betreiben eines Stromrichters, der Stromrichterarme umfasst, wobei jeder Stromrichterarm eine Reihenschaltung von Schaltmodulen mit jeweils mehreren Halbleiterschaltern und einem Energiespeicher aufweist, bei dem anhand eines Zustandsmodells des Stromrichters wenigstens ein Temperaturwert des Stromrichters ermittelt wird, unter Berücksichtigung des Temperaturwertes wenigstens ein Sollstrom-Begrenzungswert ermittelt wird und ein Sollstromwert unter Berücksichtigung des Sollstrom-Begrenzungswertes bestimmt wird. Die Stromrichterarme können beispielsweise zwischen je einer Gleichspannungsseite und einer Wechselspannungsseite des Stromrichters (AC-DC-Wandler), zwischen je einer ersten und einer zweiten Wechselspannungsseite des Stromrichters (AC-AC-Wandler), zwischen je einer ersten und einer zweiten Gleichspannungsseite des Stromrichters (DC-DC-Wandler) schaltbar oder auch mit Phasenleitungen eines Wechselspannungsnetzes verbindbar sein.

Moderne Umrichter für Hochspannungs-Gleichstrom-Übertragungen (HGÜ) zeichnen sich durch einen hohen Wirkungsgrad bei gleichzeitig hervorragenden Fähigkeiten bei dynamischen Vorgängen und Fehlerfällen aus. Die Auslegung des Umrichters basiert dabei auf drei konkurrierenden Optimierungskriterien: dem Verhalten im steady state (Dauerbetriebszustand), dem Verhalten bei dynamischen Vorgängen sowie dem Verhalten im Fehlerfall. Im steady state-Betrieb soll der Umrichter im gewählten Arbeitspunkt mit möglichst wenig Verlusten betrieben werden. Bei dynamischen Vorgängen und Fehlerfällen ist das schnelle Erreichen des gewählten Sollwertes bzw. die dynamische Beherrschung des Fehlers von hoher Wichtigkeit, wogegen die dabei entstehenden höheren Verluste nur eine untergeordnete Rolle spielen - diese finden nur zum Schutz des Umrichters Beachtung. Der Umrichter wird für den steady state-Betrieb ausgelegt und mit zusätzlichen Schaltmodulen versehen, um auch bei dynamischen Vorgängen und Fehlerfällen betrieben werden zu können. Der Umrichter wird dabei nicht für jeden Arbeitspunkt und Betriebsmodus optimal ausgenutzt. Eine messtechnische Ermittlung dieser halbleiterinternen Temperatur bzw. Verluste ist derzeit nur mit sehr hohem Aufwand bzw. unzureichender Genauigkeit möglich.

Die Verluste der Halbleiter sowie deren Belastungsgrenzen werden üblicherweise anhand der Datenblätter des Herstellers bestimmt. Mit diesen werden die Arbeitspunkte des Umrichters bestimmt und der nötige Hardwareaufwand festgelegt. Dabei werden worst-case-Szenarien im steady state-Betrieb als Grundlage herangezogen. Für Fehlerszenarien werden zusätzliche Schaltmodule eingebaut, um genügend Reserve für dynamische Fehlerfälle bereitzustellen und diese mit der festgelegten Auslegung durchfahren zu können bzw. zu beherrschen. Um Überlastungen des Stromrichters vorzubeugen, wird der Sollstrom begrenzt. Insbesondere wird mittels der StromrichterRegelung der Sollstrom-Begrenzungswert vorgegeben, so dass der Sollstromwert den Sollstrom-Begrenzungswert nicht übersteigt.

Ein artgemäßes Verfahren ist aus der WO 2020/125968 A1 bekannt. Gemäß dem bekannten Verfahren wird Begrenzungswert in Abhängigkeit von einer Stromrichtertemperatur zeitdynamisch festgelegt. Der Temperaturwert wird mittels einer geeigneten Modellierung (des Zustandsmodells) gewonnen.

Die Aufgabe der Erfindung ist es, ein artgemäßes Verfahren vorzuschlagen, das die Zuverlässigkeit des Stromrichters weiter verbessert.

Die Aufgabe wird bei dem eingangs genannten Verfahren erfindungsgemäß dadurch gelöst, dass der Temperaturwert für einen Stromrichterarm berechnet wird und in Abhängigkeit von dem Temperaturwert ein Arm-Sollstrom-Begrenzungswert für den Stromrichterarm bestimmt wird und ferner für den Stromrichterarm ein Arm-Sollstromwert unter Berücksichtigung dessen Arm-Sollstrom-Begrenzungswertes bestimmt wird, wobei der Temperaturwert, der Arm-Sollstromwert, der Arm-Iststromwert und/oder der Arm-Sollstrom-Begrenzungswert bzw. eine davon abgeleiteten Größe unter Bildung eines Arm-Integralwertes in der Zeit integriert wird, wobei, wenn der Arm-Integralwert einen vorbestimmten Arm-Integralschwellenwert erreicht oder überschreitet, eine Schutzmaßnahme zum Schutz des Stromrichters veranlasst und zweckmäßigerweise durchgeführt wird. Die Schutzmaßnahme ist geeigneterweise ein Anpassen, insbesondere ein Reduzieren wenigstens einer der Arm-Sollstromwerte und/oder wenigstens einer der Arm-Sollstrom-Begrenzungswerte. Vorzugsweise werden je ein Temperaturwert für jeden Stromrichterarm berechnet und in Abhängigkeit von den Temperaturwerten Arm-Sollstrom-Begrenzungswerte für jeden Stromrichterarm bestimmt und für jeden Stromrichterarm ein Arm-Sollstromwert unter Berücksichtigung dessen Arm-Sollstrom-Begrenzungswertes bestimmt, wobei wenigstens einer der Temperaturwerte, wenigstens einer der Arm-Sollstromwerte, der Arm-Iststromwerte und/oder wenigstens einer der Arm-Sollstrom-Begrenzungswerte bzw. eine davon abgeleiteten Größe unter Bildung wenigstens eines Arm-Integralwertes in der Zeit integriert wird oder werden. Die zeitliche Integration findet jeweils zweckmäßigerweise unter Verwendung numerischer Integration statt.

Geeigneterweise wird eine Arm-Stellspannung für den (oder jeweils eine für jeden) Stromrichterarm unter Berücksichtigung dessen Temperaturwertes ermittelt, wozu mittels eines Reglers (ggf. je für einen Stromrichterarm) aus dem Arm-Sollstromwert und gemessenem Arm-Iststromwert zugeordnete Arm-Stellspannung ermittelt wird.

Durch die zusätzliche zeitliche Integration des Temperatur-, Sollstrom- oder des Begrenzungswertes (bzw. bevorzugt der entsprechenden Werte für alle Stromrichterarme) wird ein Schutz des Stromrichters bei Überlast in Fehlerfällen sichergestellt. Erfindungsgemäß wurde erkannt, dass kurzzeitige Strom- bzw. Temperaturänderungen oftmals im Betrieb des Stromrichters hinnehmbar sind. Die thermische Belastbarkeit des Stromrichters bzw. dessen Halbleiter ist effektiver durch einen für die Halbleiter bsp. vom Hersteller angegebenen Grenzlastintegral-Schwellenwert gegeben (bsp. für einen Halbleiter in der Form "höchstens 20 ms lang 4 kA erlaubt"). Eine Gefahr für die Betriebsfähigkeit des Stromrichters ergibt somit sich dann, wenn der ermittelte Integralwert den Grenzlast-Schwellenwert oder einen entsprechenden Wert erreicht oder übersteigt (nicht bereits durch kurzzeitige Strom- bzw. Temperaturspitzen). Der Integralwert I kann beispielsweise als I = int i^2 * dt definiert werden (wobei mit "int" das Integralzeichen gekennzeichnet ist). Das Quadrat des Stromes i (Arm-Iststromes, Arm-Sollstromes oder des Arm-Sollstrom-Begrenzungswertes) ist näherungsweise äquivalent (proportional) zur absorbierten Energie. Der Integralwert kann mit einem vom Hersteller angegebenen Integralschwellenwert 10 (z.B. dem Grenzlast-Schwellenwert) verglichen werden. Die Integration kann zweckmäßigerweise über die zeitliche Länge einer Netzperiode (z.B. 20 ms) des Wechselspannungsnetzes erfolgen, an das der Stromrichter im Betrieb angeschlossen ist. Dies kann beispielsweise je nach Abtastrate der Stromwerte bzw. der zeitlichen Rate der Ermittlung der Temperatur- bzw. der Begrenzungswerte einer Integration über 500 bis 1000 Einzelwerte entsprechen. Mit dem erfindungsgemäßen Verfahren kann der Stromrichter bei dynamischen Vorgängen und Fehlerfällen bei höheren Strömen gefahren werden als bei einer konservativen Auslegung. Zudem entfällt u.U. auch die Notwendigkeit, zusätzliche Schaltmodule für Fehlerfälle zur Verfügung stellen zu müssen.

Vorzugsweise berücksichtigt das Zustandsmodell bei der Berechnung der Temperaturwerte zumindest folgende Stromrichtergrößen: Energiespeicherspannungen, Schaltzustände und Schaltfrequenzen zumindest einiger Schaltmodule sowie Armspannungen und Armströme des oder der betreffenden Stromrichterarme. Das Zustandsmodell kann in einer Regelungseinrichtung des Stromrichters implementiert sein, insbesondere in einem Stromregelungssystem ("current control system"). Das Zustandsmodell umfasst bevorzugt ein Temperaturmodell, mittels dessen die momentane Temperatur bzw. der entsprechende momentane Temperaturwert berechnet (insbesondere geschätzt) wird. Der Temperaturwert des Stromrichters kann dabei ein Temperaturwert eines "mittleren Schaltmoduls" sein. Das bedeutet, dass im Temperaturmodell ein Schaltmodul modelliert wird, das im einfachsten Fall alle Schaltmodule des Stromrichters, geeigneterweise alle Schaltmodule eines Stromrichterarmes repräsentiert. Die Temperatur (Temperaturwert) eines Schaltmoduls wird zweckmäßigerweise wiederum als eine mittlere Temperatur dessen Halbleiter bzw. deren Sperrschichten (junction temperature) verstanden. Es werden bestenfalls alle Sperrschichttemperaturen des mittleren Schaltmoduls (also für eine Halbbrücke die beiden IGBT- und die beiden Dioden-Junction-Temperaturen) berechnet und können entsprechend in die weitere Verarbeitung einfließen. Verfahren zu einer Temperatur- bzw. Zustandsmodellierung von Halbleitern sind aus der Fachliteratur bekannt. Als Beispiele können hier der Beitrag von Beczkowski et al. "Complete Loss and Thermal Model of Power Semiconductors Including Device Rating Information", IEEE Transactions on Power Electronics, 2015, und der Beitrag von Alavi et al. "Assessment of thermal network models for estimating IGBT junction temperature of a buck converter", 2017 8th Power Electronics, Drive Systems & Technologies Conference (PEDSTC), genannt werden. Die Energiespeicherspannung ist die momentan an einem der Energiespeicher eines der Schaltmodule anstehende Spannung. Die Energiespeicherspannung kann mittels einer geeigneten Messvorrichtung am oder im Schaltmodul erfasst und an die Regelungseinrichtung übermittelt werden. Der Schaltzustand eines Schaltmoduls gibt an, ob der Energiespeicher des Schaltmoduls sich momentan im Strompfad des Stromrichterarmes befindet oder überbrückt ist ("ein" oder "aus"). Die Berücksichtigung des Schaltzustandes im Zustandsmodell bzw. Temperaturmodell ist vorteilhaft, weil der Schaltzustand angibt, wo im Stromrichter die Temperatur momentan ansteigt bzw. Verluste entstehen. Die Schaltfrequenz ist geeigneterweise als Schaltpaarhäufigkeit definiert (Anzahl der Einschaltvorgäge+Ausschaltvorgänge/Zeitintervall; Zeitinvervall ist beispielsweise gleich der Netzperiode). Die Berücksichtigung der Schaltfrequenzen im Zustandsmodell bzw. Temperaturmodel ist vorteilhaft, weil die Schaltfrequenz die Höhe der Schaltverluste beeinflusst. Die Armspannung ist die momentan an einem Stromrichterarm anstehende Spannung. Die Armspannungen werden für alle Stromrichterarme kontinuierlich mittels Spannungsmessvorrichtungen gemessen und können an die Regelungseinrichtung übermittelt werden. Der Armstrom ist der durch den zugeordneten Stromrichterarm momentan fließende Strom. Der Armstrom bestimmt u.a. auch die Stromflussrichtung und damit im günstigsten Fall auch, welcher Halbleiter stromführend ist (IGBT/Diode). Die Armströme der Stromrichterarme werden ebenfalls kontinuierlich mittels Strommesseinrichtungen gemessen und können an die Regelungseinrichtung übermittelt werden. Als weiterer Eingangsparameter für das Zustandsmodell ist beispielsweise ein Redundanzverbrauchswert denkbar. Der Redundanzverbrauchswert gibt an, wie viele Schaltmodule in einem Stromrichterarm in der Vergangenheit bereits ausgefallen bzw. fehlerhaft sind.

Vorzugsweise wird das Berechnen der Temperaturwerte wiederholt in Zeitabständen von weniger als 1 s durchgeführt, besonders bevorzugt in Zeitabständen von weniger als 100 Mikrosekunden. Auf diese Weise ist eine besonders fein aufgelöste und damit zuverlässige Berechnung des Integralwertes ermöglicht.

Das Bestimmen der Arm-Sollstrom-Begrenzungswerte wird anhand einer Temperatur-Strom-Kennlinie und/oder einer Temperaturregelung durchgeführt. Zur Bestimmung der Arm-Sollstrom-Begrenzungswerte für mehrere Stromrichterarme können grundsätzlich jeweils unterschiedliche Kennlinien oder Regelungsvorschriften definiert werden. Grundsätzlich werden mittels des Zustandsmodels bzw. des Temperaturmodells der oder die Temperaturwerte bereitgestellt. Die Übersetzung der Temperaturwerte in entsprechende Begrenzungswerte erfolgt demnach zum Beispiel in einer gesonderten Algorithmik (geeigneterweise innerhalb der Regelung), mittels der die Begrenzungswerte derart festgelegt werden, dass ein Regelungsfehler zwischen einer vorgegebenen Solltemperatur und dem Temperaturwert minimiert wird. Zur Übersetzung der Temperaturwerte in Begrenzungswerte kann auch eine entsprechende (bsp. lineare) Kennlinie verwendet werden.

Gemäß einer Ausführungsform der Erfindung wird mittels des Zustandsmodells ein Verlustwert für wenigstens einen, bevorzugt für jeden Stromrichterarm bereitgestellt, wobei der Verlustwert ein Schaltverlustwert, ein Durchleitverlustwert, ein Eigenbedarfsverlustwert oder ein Gesamtverlustwert ist. Der Verlustwert kann beispielsweise als ein Zwischenwert bei der Ermittlung des Temperaturwertes berechnet werden. Der Schaltverlustwert bemisst die Schaltverluste der Halbleiterschalter. Der Eigenbedarfsverlustwert entspricht den elektrischen Verlusten im Schaltmodul bsp. bei einer Selbstentladung im Betrieb. Der Gesamtverlustwert ist die Summe der übrigen Verlustwerte. Die in Echtzeit berechneten Verlustwerte können vorteilhaft als zusätzliche Information bei der Stromregelung verwendet werden. Basierend auf einem "gemittelten" Verlustmodell werden der Stromrichterregelung die Halbleiterverluste als zusätzliche Informationen zur Verfügung gestellt, wodurch der Umrichter im steady-state adaptiv für jeden Arbeitspunkt mit den niedrigsten Verlusten betrieben werden kann. Bei dynamischen Vorgängen und Fehlerfällen stellt sich der Umrichter entsprechend auf höhere Ströme ein.

Vorzugsweise wird jeweils eine Arm-Stellspannung für jeden Stromrichterarm unter Berücksichtigung dessen Verlustwertes ermittelt, wobei insbesondere mittels eines Reglers aus den Arm-Sollstromwerten und gemessenen Arm-Iststromwerten zugeordnete Arm-Stellspannungen ermittelt werden. Das Berücksichtigen des Verlustwertes kann beispielsweise dadurch erfolgen, dass die Regelungseinrichtung in Abhängigkeit von dem Verlustwert zwischen unterschiedlichen Regelungs- bzw. Betriebsmodi wechselt. Beispielsweise wird der Stromrichter in einem ersten Modus betrieben, wenn der Verlustwert unterhalb einer Verlustschwelle liegt, und in einem zweiten Modus betrieben, wenn der Verlustwert gleich oder höher als die Verlustschwelle liegt. Die Regelung der Armströme kann auf den Verlustwert reagieren, indem bei niedrigen Verlustwerten (unterhalb einer Verlustschwelle) andere Regelungsparameter priorisiert als bei hohen Verlustwerten (bei Verlustschwelle oder höher als diese).

Geeigneterweise wird der Stromrichter in Abhängigkeit vom Verlustwert in einem Dauerbetriebsmodus betrieben, bei dem der Verlustwert minimiert wird, oder in einem Belastungsmodus betrieben wird, bei dem eine Belastung der Halbleiterschalter oder Halbleiterdioden reduziert wird. Auf diese Weise kann vorteilhaft ein Optimum zwischen der Zuverlässigkeit des Stromrichters im Betrieb (durch niedrigere Halbleiterbeanspruchung) und der Leistung (durch minimierte Verluste) erreicht werden. Die Belastung der Halbleiterschalter kann zum Beispiel durch eine Reduktion der Schaltfrequenz der betreffenden Halbleiterschalter oder durch Aufschalten (Erzeugen) höherer Harmonischer (auf die erzeugte Wechselspannung) erreicht werden. Der Verlustwert kann beispielsweise durch eine höhere Spannung bei gleichem Strom reduziert werden.

Gemäß einer Ausführungsform der Erfindung werden mittels eines Reglers aus den Arm-Sollstromwerten und gemessenen Arm-Iststromwerten zugeordnete Arm-Stellspannungen ermittelt, aus den Arm-Stellspannungen Schaltbefehle für die Schaltmodule festgelegt werden, wobei bei dem Festlegen der Schaltbefehle die Verlustwerte als ein (zusätzliches) Optimierungskriterium verwendet werden. Ein Schaltbefehl gibt an, dass das betreffende Schaltmodul ein- bzw. ausgeschaltet werden soll bzw. wird. Die Übersetzung der Arm-Stellspannungen in Schaltbefehle für einzelne Schaltmodule im betreffenden Stromrichterarm kann beispielsweise mittels eines geeigneten Modul-Managementsystems durchgeführt werden. Dabei können durch die Auswahl der zu schaltenden Schaltmodule gegebene Optimierungskriterien berücksichtigt werden. Eines der Optimierungskriterien kann eine Symmetrierung der Energiespeicher sein, deren Ziel eine gleichmäßige Aufladung der Energiespeicher ist. Dementsprechend können aus den Arm-Stellspannungen Schaltbefehle für die Schaltmodule unter Anwendung eines Symmetrierungsalgorithmus zur Symmetrierung von Energiespeicherspannungen festgelegt werden. Geeignete Symmetrierungsalgorithmen sind grundsätzlich aus dem Stand der Technik bekannt. Als Kriterium hierzu ist beispielsweise eine Abweichung einer momentanen Energiespeicherspannung von einer mittleren Energiespeicherspannung im Stromrichterarm denkbar.

Die Erfindung betrifft ferner einen Stromrichter, der zwischen je einer Wechselspannungsseite und einer Gleichspannungsseite schaltbare oder mit Phasenleitungen eines Wechselspannungsnetzes verbindbare Stromrichterarme umfasst, wobei jeder Stromrichterarm eine Reihenschaltung von Schaltmodulen mit jeweils mehreren Halbleiterschaltern und einem Energiespeicher aufweist.

Die Aufgabe der Erfindung ist es, einen solchen Stromrichter vorzuschlagen, der möglichst effizient und zuverlässig im Betrieb ist.

Die Aufgabe wird bei einem artgemäßen Stromrichter erfindungsgemäß durch eine Regelungseinrichtung gelöst, die zum Durchführen eines erfindungsgemäßen Verfahrens eingerichtet ist.

Die Vorteile des erfindungsgemäßen Stromrichters ergeben sich insbesondere aus den im Zusammenhang mit dem erfindungsgemäßen Verfahren beschriebenen Vorteilen.

Der Stromrichter kann beispielsweise für eine HGÜ-Anwendung oder auch für eine FACTS-Anwendung vorgesehen und insbesondere ein modularer Mehrstufenumrichter sein. Die Schaltmodule können zum Beispiel die dem Fachmann bekannten Halbbrücken-Schaltmodule oder Vollbrücken-Schaltmodule sein.

Die Erfindung wird nachfolgend anhand von Ausführungsbeispielen weiter erläutert, die in Figuren 1 bis 5 dargestellt sind.
Figur 1 zeigt einen erfindungsgemäßen Stromrichter in einer schematischen Darstellung;
Figur 2 zeigt ein erstes Ausführungsbeispiel einer Regelungseinrichtung für einen erfindungsgemäßen Stromrichter in einer schematischen Darstellung;
Figur 3 zeigt ein zweites Ausführungsbeispiel einer Regelungseinrichtung für einen erfindungsgemäßen Stromrichter in einer schematischen Darstellung;
Figur 4 zeigt ein drittes Ausführungsbeispiel einer Regelungseinrichtung für einen erfindungsgemäßen Stromrichter in einer schematischen Darstellung;
Figur 5 zeigt ein viertes Ausführungsbeispiel einer Regelungseinrichtung für einen erfindungsgemäßen Stromrichter in einer schematischen Darstellung.

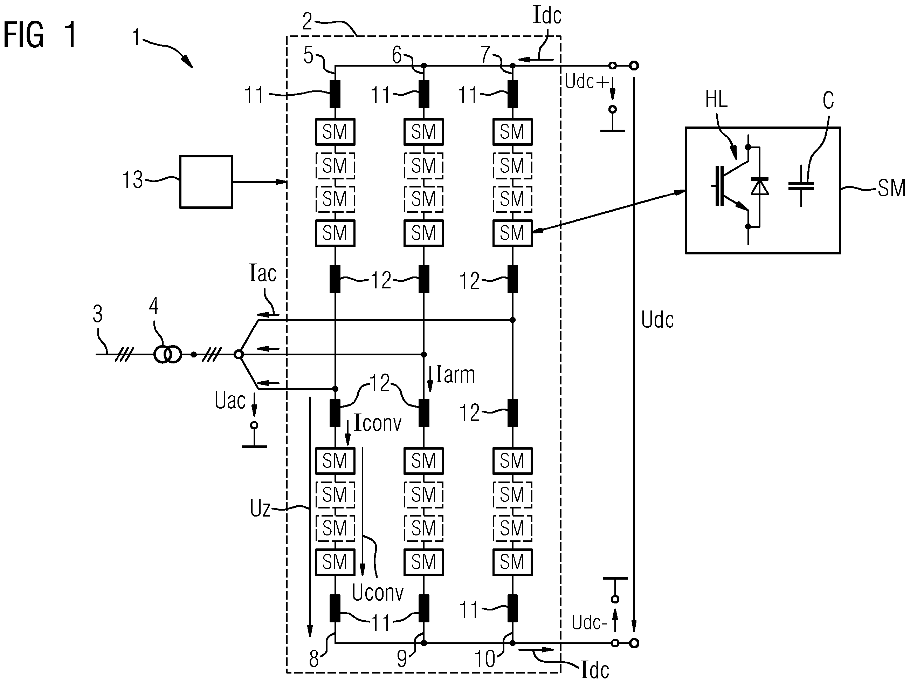

In Figur 1 ist eine Stromrichteranordnung 1 dargestellt. Die Stromrichteranordnung 1 umfasst einen Stromrichter 2, der ein modularer Mehrstufenstromrichter (MMC) ist. Der MMC ist im dargestellten Beispiel zur Umwandlung einer Wechselspannung eines Wechselspannungsnetzes 3, mit dem der MMC 2 mittels eines Netztransformators 4 verbunden ist, in eine Gleichspannung Ude umzuwandeln.

Der MMC 2 umfasst sechs Stromrichterarme 5-10, die miteinander in einer Doppelsternschaltung verbunden sind. Jeder der gleichartig aufgebauten Stromrichterarme 5-10 umfasst zwei Arminduktivitäten 11, 12 sowie je eine Reihenschaltung zweipoliger Schaltmodule SM. In dem in Figur 1 dargestellten Ausführungsbeispiel sind alle Schaltmodule SM gleichartig aufgebaut, was jedoch im Allgemeinen nicht notwendig ist. Auch die Anzahl der Schaltmodule SM in jedem Stromrichterzweig 5-10 ist grundsätzlich beliebig und an die jeweilige Anwendung anpassbar. Die Schaltmodule SM können beispielsweise Vollbrücken-Schaltmodule oder Halbbrücken-Schaltmodule sein. Jedes Schaltmodul SM umfasst steuerbare Halbleiterschalter, z.B. IGBT oder dergleichen (ein Vollbrücken-Schaltmodul mindestens vier Halbleiterschalter, ein Halbbrücken-Schaltmodul mindestens zwei Halbleiterschalter) einen Energiespeicher (zum Beispiel in Form eines Kondensators) sowie eine Steuerungsbaugruppe, mittels der die Halbleiterschalter angesteuert werden können. Bezüglich des Aufbaus der genannten Beispiele für Schaltmodule wird hiermit auf die bereits genannte Druckschrift WO 2020/125968 A1 verwiesen.

Die Stromrichteranordnung 1 bzw. der Stromrichter 2 umfasst ferner eine zentrale Regelungseinrichtung 13, die zum Regeln des MMC 2 (bzw. der Regelungsgrößen) und zum Ansteuern der Schaltmodule SM eingerichtet ist. Die Regelungseinrichtung 13 erhält von einer übergeordneten Instanz Vorgaben bezüglich der geforderten Wirkleistung und Blindleistung, die von der Regelungseinheit in Sollwerte von Regelungsparametern, z.B. von Spannung und Strom umgesetzt werden. Die Regelungsparameter können somit insbesondere eine wechselspannungsseitige Spannung Uac, ein wechselspannungsseitiger Strom Iac, ein gleichspannungsseitiger Strom Idc und/oder eine gleichspannungsseitige Spannung Udc sein. In einem Stromrichter, der als ein symmetrischer Monopol konzipiert ist, können eine Spannung Udc+ zwischen dem positiven Gleichspannungspol und dem Erdpotenzial und eine Spannung Udc- zwischen dem negativen Gleichspannungspol und dem Erdpotenzial von Bedeutung sein. Im hier dargestellten Beispiel sind der Armstrom (der durch einen der Stromrichterarme fließende Strom) jeweils die Regelgröße und die Armspannung entsprechend die Stellgröße der Stromrichteranordnung 1.

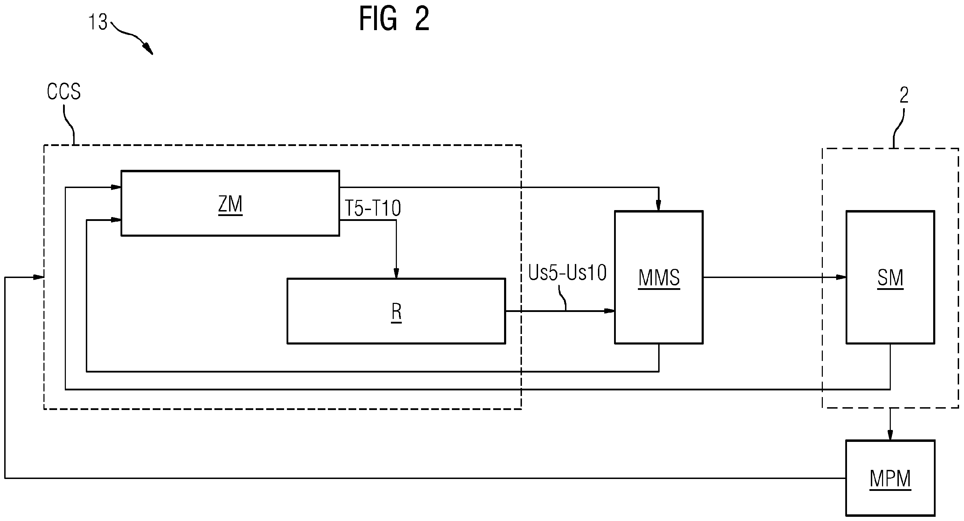

In Figur 2 ist die Regelungseinrichtung 13 für den Stromrichter 2 (beispielsweise den Stromrichter 2 der Figur 1) dargestellt. Die Regelungseinrichtung 13 umfasst mehrere Komponenten. Ein Modul-Management-System MMS ist jedem der Schaltmodule SM des Stromrichter 2 zugeordnet. Das MMS ist dazu eingerichtet, vom zugeordneten Schaltmodul SM Zustandsdaten des Schaltmoduls zu ermitteln bzw. zu übermittelt zu bekommen und diese an ein zentrales Current Control System CCS zu übermitteln. Zugleich werden am Schaltmodul SM gemessenen Messgrößen wie der durch das Schaltmodul fließende Strom oder die am Energiespeicher des Schaltmoduls anstehende Spannung mittels eines Measurement & Processing Module MPM aufgenommen und verarbeitet.

Unabhängig von der Realisierung der übrigen Komponenten können die am Schaltmodul gemessenen Messgrößen vor der Weiterleitung bzw. Übermittlung an das CCS verarbeitet, insbesondere gefiltert (z.B. tiefpassgefiltert) oder entrauscht werden (durch Herausfiltern hochfrequenter Signalanteile).

Das CCS umfasst ein Zustandsmodell-Modul ZM, das in der Realisierung kein gesondertes Hardware-Modul sein muss, sondern auch als eine Software-Funktion innerhalb der Regelungshardware implementiert sein kann. Im Zustandsmodell-Modul ZM ist ein Zustandsmodell des Stromrichters 2 implementiert. Das Zustandsmodell kann beispielsweise in Form einer oder mehrerer Differenzialgleichungen realisiert sein, die rechnerische Eingangsgrößen in ebensolche Ausgangsgrößen umwandeln können. Im hier dargestellten Beispiel gehen zumindest die folgenden Eingangsgrößen in das Zustandsmodell ein: Energiespeicherspannungen aller Schaltmodule SM des Stromrichters 2 (diese werden vom MPM geliefert), Schaltzustände aller Schaltmodule SM (diese werden von den Schaltmodulen übermittelt) und Schaltfrequenzen aller Schaltmodule SM (diese im jeweiligen MMS ermittelt und an das CCS übermittelt) sowie Armspannungen Uconv und Armströme Iarm der Stromrichterarme 5-10. Als Ausgangsgrößen werden (skalare) Temperaturwerte T5-T10 für jeden der Stromrichterarme 5-10 am Ausgang des ZM bereitgestellt. Die Bereitstellung der Temperaturwerte findet in zeitlichen Abständen von 50 Mikrosekunden statt. Unter Berücksichtigung des Temperaturwertes, im dargestellten Beispiel durch eine Übersetzung mittels einer linearen Kennlinie, wird für jeden Stromrichterarm 5-10 ein Arm-Sollstrom-Begrenzungswert ermittelt. Der jeweilige Arm-Sollstrom-Begrenzungswert ist der höchste zulässige Wert, den ein Sollstromwert (zu dem jeweiligen Zeitpunkt) annehmen kann. Zudem werden im hier dargestellten Beispiel die Arm-Sollstrom-Begrenzungswerte unter Bildung eines Arm-Integralwertes AI5-AI10 in der Zeit integriert. Mittels eines Regelungsmoduls R (umfassend geeignete Regler) werden aus den Temperaturwerten T5-T10 und den Arm-Integralwerten AI5-AI10 Stellspannungen Us5-Us10 ermittelt und an das jeweilige MMS übermittelt (wobei im CCS überprüft wird, ob der jeweilige Arm-Integralwert den entsprechenden Arm-Integralschwellenwert erreicht oder überschritten hat). Das jeweilige MMS übersetzt die Stellspannungen anschließend in geeignete Schaltbefehle für die zugeordneten Schaltmodule SM und übermittelt entsprechend diese Schaltbefehle an die einzelnen Schaltmodule SM.

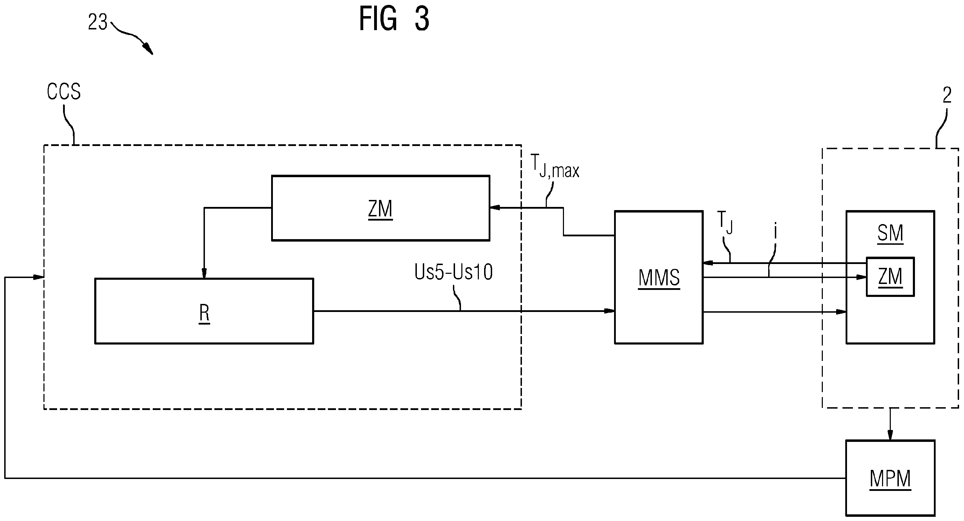

In Figur 3 ist eine Regelungseinrichtung 23 dargestellt, die als die Regelungseinrichtung 13 für den Stromrichter 2 der Figur 1 einsetzbar ist. Gleiche und gleichartige Elemente und Komponenten sind in den Figuren 2 und 3 mit gleichen Bezugszeichen versehen. Im Unterschied zum Ausführungsbeispiel der Figur 2 ist in Figur 3 eine Implementierung des Zustandsmodells bzw. des Temperaturmodells auf Modulebene vorgesehen. Zur Berechnung der Temperaturwerte Tj werden von der MMS and die Schaltmodule SM bzw. an das in dem Schaltmodul SM integrierte Zustandsmodell-Modul ZM Stromwerte übermittelt. Die berechneten Temperaturwerte Tj jedes einzelnen Schaltmoduls SM werden gemäß dem Beispiel der Figur 3 zunächst and die MMS übermittelt und von der MMS sortiert. Anschließend wird der durch die Sortierung gewonnene Maximalwert Tj,max der Temperaturen Tj an die CCS gesendet. Mittels eines geeigneten Logikmoduls 24 der CCS werden die Sollstrom-Begrenzungswerte ermittelt und an das Regelungsmodul R weitergeleitet. Die Implementierung des Zustandsmodells auf Schaltmodulebene erfordert auf Grund der hohen Komplexität des Temperaturmodells eine deutlich erhöhte Hardwareanforderung an die Modulbaugruppen.

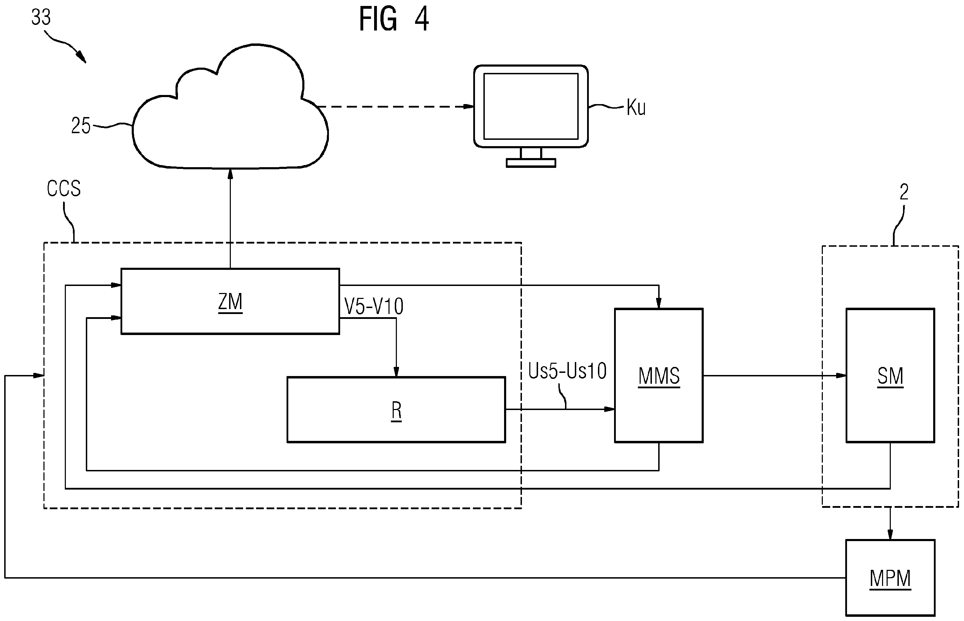

In Figur 4 ist eine Regelungseinrichtung 33 dargestellt, die als die Regelungseinrichtung 13 für den Stromrichter 2 der Figur 1 einsetzbar ist. Gleiche und gleichartige Elemente und Komponenten sind in den Figuren 2 und 4 mit gleichen Bezugszeichen versehen.

Mittels des Zustandsmodells im Zustandsmodell-Modul ZM wird ein Verlustwert für jeden Stromrichterarm bereitgestellt, indem Halbleiterverluste der Halbleiterschalter der Schaltmodule rechnerisch geschätzt werden. Am Ausgang des Zustandsmodell-Moduls ZM wird dabei ein Gesamtverlustwert V5-V10 für jeden Stromrichterarm 5-10 (vgl. Figur 1) bereitgestellt, der sich aus einem Schaltverlustwert, einem Durchleitverlustwert und einem Eigenbedarfsverlustwert zusammensetzt. Die berechneten Gesamtverlustwerte V5-V10 werden an das Modul Management System MMS und zugleich an das Regelungsmodul R übermittelt.

Mittels des Regelungsmoduls werden Arm-Stellspannungen Us5-Us10 für jeden Stromrichterarm 5-10 ermittelt, wobei die Bestimmung der Arm-Stellspannungen unter Berücksichtigung dessen Gesamtverlustwertes durchgeführt wird. Insbesondere ist das Regelungsmodul R dazu eingerichtet, in Abhängigkeit von den Gesamtverlustwerten zwischen zwei Betriebsmodi zu schalten: einem Dauerbetriebsmodus bei dem der Gesamtverlustwert minimiert wird, und einem Belastungsmodus, bei dem eine Belastung der Halbleiterschalter reduziert wird. Das MMS ist dazu entsprechend eingerichtet, gemäß dem vorgegebenen Betriebsmodus die Arm-Stellspannungen in geeignete Schaltbefehle für die einzelnen Schaltmodule SM umzuwandeln. Bei dem Festlegen der Schaltbefehle durch das MMS werden zusätzlich die Gesamtverlustwerte V5-V10 als ein Optimierungskriterium verwendet, d.h. die Wahl der als nächstes zu schaltenden Schaltmodule SM richtet sich (insbesondere auch) nach dem Kriterium der Optimierung bzw. Minimierung des jeweiligen Gesamtverlustes V5-V10.

Die Berechnung der Verluste erfolgt beispielsweise anhand gleicher Methodik und mit den gleichen Eingangsparametern, wie für die Auslegung und Verlustbewertung der Gesamtanlage für den Kunden. In einem Operational Test, der beispielsweise in einer cloud 25 außerhalb der Stromrichteranordnung 1 stattfinden kann, können die in Echtzeit berechneten und an die cloud 25 übermittelten Gesamtverluste daher gegen messtechnisch ermittelte Werte (z.B. kalorimetrisch oder über die elektrische Einspeisung) verglichen werden. Die resultierenden Vergleichsergebnisse verifizieren und bestätigen geeigneterweise zusätzlich die Richtigkeit der theoretischen Angaben gegenüber dem Kunden und führen somit zu einer höheren Transparenz über die internen Berechnungsmethoden.

Zugleich bietet das Konzept auch die Möglichkeit, die Verluste jederzeit in Echtzeit darstellen zu können und diese auch einem Kunden Ku zur Verfügung stellen zu können. Ein Abgleich mit Verlusten anderer Stromrichteranordnungen ist ebenfalls möglich, wodurch die gewonnenen Echtzeitdaten zur Verbesserung von Betriebsmodi und Algorithmen genutzt werden können. Auch erlaubt die Kenntnis über die aktuellen Halbleiterverluste eine Optimierung auf Stationsebene, wie z.B. durch Anpassung des Kühlkreislaufes, Anpassung der Sollwerte etc.

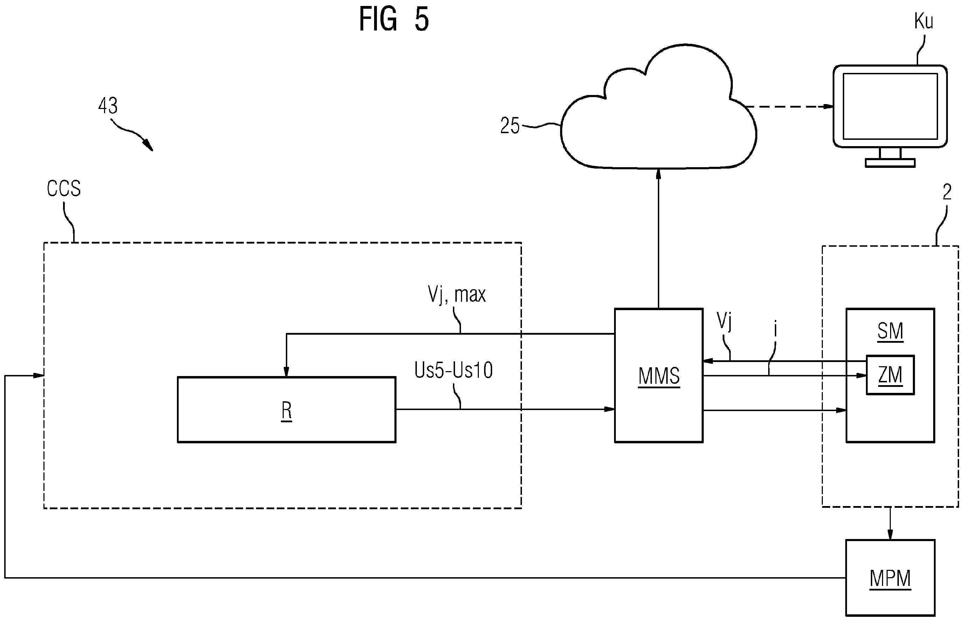

In Figur 5 ist eine Regelungseinrichtung 43 dargestellt, die als die Regelungseinrichtung 13 für den Stromrichter 2 der Figur 1 einsetzbar ist. Gleiche und gleichartige Elemente und Komponenten sind in den Figuren 2,4 und 5 mit gleichen Bezugszeichen versehen. Im Unterschied zum Ausführungsbeispiel der Figur 4 ist in Figur 5 eine Implementierung des Zustandsmodells bzw. des Temperaturmodells auf Modulebene vorgesehen. Die berechneten Halbleiterverluste (Gesamtverluste Vj) jedes einzelnen Schaltmoduls SM müssen zunächst von der MMS sortiert und der damit bestimmte Maximalwert Vj,max anschließend an die CCS gesendet werden. Dies erfordert auf Grund der hohen Komplexität des Verlustmodells eine deutlich erhöhte Hardwareanforderung an die Modulbaugruppen, sowie einschneidende Änderungen der übermittelten Signale.

## Patentansprüche

1. Verfahren zum Betreiben eines Stromrichters (2), der Stromrichterarme (5-10) umfasst, wobei jeder Stromrichterarm (5-10) Schaltmodule (SM) mit jeweils mehreren Halbleiterschaltern (HL) und einem Energiespeicher (C) aufweist, bei dem
anhand eines Zustandsmodells des Stromrichters (2) ein Temperaturwert für den Stromrichter ermittelt wird, unter Berücksichtigung des Temperaturwertes ein Sollstrom-Begrenzungswert ermittelt wird und ein Sollstromwert unter Berücksichtigung des Sollstrom-Begrenzungswertes bestimmt wird,
**dadurch gekennzeichnet, dass**
der Temperaturwert für einen Stromrichterarm (5-10) berechnet wird und in Abhängigkeit von dem Temperaturwert für den Stromrichterarm (5-10) ein Arm-Sollstrom-Begrenzungswert sowie unter Berücksichtigung des Arm-Sollstrom-Begrenzungswertes ein Arm-Sollstromwert bestimmt werden, wobei
der Temperaturwert, der Arm-Sollstromwert, der Arm-Iststromwert und/oder der Arm-Sollstrom-Begrenzungswert bzw. eine davon abgeleiteten Größe unter Bildung eines Arm-Integralwertes in der Zeit integriert wird, wobei, wenn der Arm-Integralwert einen vorbestimmten Arm-Integralschwellenwert erreicht oder überschreitet, eine Schutzmaßnahme zum Schutz des Stromrichters (2) veranlasst wird.

2. Verfahren nach Anspruch 1, wobei das Zustandsmodell bei der Berechnung des Temperaturwertes zumindest folgende Stromrichtergrößen berücksichtigt: Energiespeicherspannungen, Schaltzustände und Schaltfrequenzen zumindest einiger Schaltmodule (SM) sowie eine Armspannung und einen Armstrom des Stromrichterarmes (5-10).

3. Verfahren nach einem der vorangehenden Ansprüche, wobei das Berechnen der Temperaturwerte wiederholt in Zeitabständen von weniger als 1 s, vorzugsweise weniger als 100 Mikrosekunden, durchgeführt wird.

4. Verfahren nach Anspruch 3, wobei das Bestimmen des Arm-Sollstrom-Begrenzungswertes anhand einer Temperatur-Strom-Kennlinie und/oder einer Temperaturregelung durchgeführt wird.

5. Verfahren nach einem der vorangehenden Ansprüche, wobei mittels des Zustandsmodells ein Verlustwert für jeden Stromrichterarm bereitgestellt wird, wobei der Verlustwert ein Schaltverlustwert, ein Durchleitverlustwert, ein Eigenbedarfsverlustwert oder ein Gesamtverlustwert ist.

6. Verfahren nach Anspruch 5, wobei jeweils eine Arm-Stellspannung für jeden Stromrichterarm (5-10) unter Berücksichtigung dessen Verlustwertes ermittelt wird.

7. Verfahren nach Anspruch 6, wobei der Stromrichter (2) in Abhängigkeit vom Verlustwert in einem Dauerbetriebsmodus betrieben wird, bei dem der Verlustwert minimiert wird, oder in einem Belastungsmodus betrieben wird, bei dem eine Belastung von Halbleiterbauteilen der Schaltmodule, insbesondere der Halbleiterschalter, reduziert wird.

8. Verfahren nach Anspruch 5 bis 7, wobei mittels eines Reglers bzw. Regelmoduls (R) aus den Arm-Sollstromwerten und gemessenen Arm-Iststromwerten zugeordnete Arm-Stellspannungen ermittelt werden, aus den Arm-Stellspannungen Schaltbefehle für die Schaltmodule (SM) festgelegt werden, wobei bei dem Festlegen der Schaltbefehle die Verlustwerte als ein Optimierungskriterium verwendet werden.

9. Verfahren nach einem der vorangehenden Ansprüche, wobei aus den Arm-Stellspannungen Schaltbefehle für die Schaltmodule (SM) unter Anwendung eines Symmetrierungsalgorithmus zur Symmetrierung von Energiespeicherspannungen festgelegt werden.

10. Stromrichter (2) der Stromrichterarme (5-10) umfasst, wobei jeder Stromrichterarm (5-10) Schaltmodule (SM) mit jeweils mehreren Halbleiterschaltern (HL) und einem Energiespeicher (C) aufweist,
**gekennzeichnet durch**
eine Regelungseinrichtung (13), die zum Durchführen eines Verfahrens nach den Ansprüchen 1 bis 9 eingerichtet ist.
